# EUROPÄISCHE PATENTSCHRIFT

(11) **EP 2 359 424 B1**
(45) Veröffentlichungstag und Bekanntmachung des Hinweises auf die Patenterteilung: **01.01.2014**
(21) Anmeldenummer: 09782955.0
(22) Anmeldetag: 14.09.2009
(51) Int. Cl.: H01M 2/36, H01M 10/42

(54) **BATTERIE MIT VORRICHTUNG ZUM NACHFÜLLEN VON ELEKTROLYT**
BATTERY WITH DEVICE FOR REFILLING OF ELECTROLYTE
BATTERIE AVEC DISPOSITIF DE REMPLISSAGE D'ELECTROLYTE

(30) Priorität: 18.11.2008 DE 102008043808
(43) Veröffentlichungstag der Anmeldung: 24.08.2011
(73) Patentinhaber: Robert Bosch GmbH, 70442 Stuttgart (DE)
(72) Erfinder: SCHUMANN, Bernd, 71277 Rutesheim (DE); BABA, Niluefer, 70499 Stuttgart (DE)
(86) Internationale Anmeldenummer: PCT/EP2009/061852
(87) Internationale Veröffentlichungsnummer: WO 2010/057696

(56) Entgegenhaltungen:
- WO-A1-2007/118358
- DE-A1- 2 003 968
- DE-A1-102005 004 843
- DE-U- 6 907 134
- US-A- 4 004 068
- US-A- 4 477 540
- US-A1- 2006 240 317

## Beschreibung

Die vorliegende Erfindung betrifft eine Batterie gemäß dem Oberbegriff des Anspruches 1 und ein Batteriemodul gemäß dem Oberbegriff des Anspruches 6.

### Stand der Technik

Batterien, z. B. Lithiumionenbatterien, versorgen verschiedene Einrichtungen, z. B. Kraftfahrzeuge, Krankhäuser oder Bohrmaschinen mit elektrischem Strom. Im Allgemeinen sind mehrere Batterien in einem Gehäuse eines Batteriemoduls zu einer größeren Anordnung von Batterien zusammengefasst. Batteriemodule haben den Vorteil, dass diese leichter mit einem Kühlfluid gekühlt und höhere elektrische Leistungen durch die Kombination von mehreren Batterien zu einem Batteriemodul zur Verfügung gestellt werden können.

In den Batterien sind Elektroden sowie wenigstens ein Elektrolyt vorhanden. Mittels chemischer Prozesse in der Batterie kann die Batterie elektrischen Strom zur Verfügung stellen und umgekehrt mittels elektrischen Strom wieder aufgeladen werden. Im Betriebsverlauf einer Batterie wird das Material, aus dem die Elektro-den bestehen und der Elektrolyt bzw. die Elektrolytsubstanz durch verschiedene Oxidationsreaktionen bzw. andere Reaktionen häufig unter Gasentwicklung auf irreversible Weise verbraucht. Diese Prozesse sind unter anderem verantwortlich für eine irreversible Alterung der Batterie mit der Konsequenz einer stark verkürzten Lebensdauer der Batterie.

Die DE 6907134 U offenbart eine Batterie mit einem Vorratsbehälter für einen Elektrolyten und Mittel zum Nachfüllen des Elektrolyten.

### Offenbarung der Erfindung

### Vorteile der Erfindung

Eine erfindungsgemäße Batterie umfasst ein Gehäuse zur Aufnahme wenigstens eines Elektrolyten, wenigstens einen von dem Gehäuse aufgenommenen Elektrolyten, vorzugsweise wenigstens eine Einrichtung zum Ableiten und/oder Auffangen von Gasen oder Dämpfen aus der Batterie, wobei die Batterie mit wenigstens einem Mittel zum Nachfüllen des wenigstens einen Elektrolyten versehen ist. In die Batterie kann somit der wenigstens eine Elektrolyt nachgefüllt werden, so dass der irreversible Verbrauch des Elektrolyten ersetzt und dadurch die Lebensdauer der Batterie wesentlich verlängert werden kann.

In der erfindungsgemäßen Batterie umfasst das wenigstens eine Mittel wenigstens ein Vorratsbehälter für den wenigstens einen Elektrolyten und/oder wenigstens eine Zugabevorrichtung zum Einleiten des wenigstens einen Elektrolyten, insbesondere von dem wenigstens einen Vorratsbehälter, in die Batterie. In dem Vorratsbehälter wird der Elektrolyt zum Nachfüllen in die Batterie aufbewahrt. Es kann ein Vorratsbehälter jeweils einer Batterie zugeordnet werden oder es kann auch ein Vorratsbehälter mehreren Batterien zugeordnet sein. Beispielsweise bei der Anordnung von mehreren Batterien in einem Batteriemodul kann in dem Batteriemodul ein Vorratsbehälter zur Aufbewahrung und Speicherung des Elektrolyten vorhanden sein, von dem aus sämtliche Batterien des Batteriemoduls mit dem Elektrolyten nachgefüllt werden können.

Ferner umfasst die wenigstens eine Zugabevorrichtung eine Membran.

In einer weiteren Ausgestaltung umfasst die wenigstens eine Zugabevorrichtung ein Ventil oder einen Hahn.

Erfindungsgemäß ist das Einleiten des wenigstens einen Elektrolyten mittels Zerreißen oder Schmelzen der wenigstens einen Membran ausführbar.

Erfindungsgemäß ist das Nachfüllen des wenigstens einen Elektrolyten mit Hilfe eines eine Gasmenge mindestens indirekt erfassenden Gasmengensensors steuerbar. Der Gasmengensensor kann beispielsweise ein Drucksensor zur Erfassung des Druckes in einer Gasauffangkammer sein oder ein Sensor, welcher mittels Durchflussmessung die Menge des ausgeströmten Gases oder der ausgeströmten Dämpfe erfasst. Der Gasmengensensor erfasst die Menge der aus der Batterie ausgetrömten Gase oder der ausgetretenen Dämpfe.

Erfindungsgemäß ist das Schmelzen der wenigstens einen Membran von einem Halbleiterchip steuerbar.

In einer Variante ist das Schmelzen der wenigstens einen Membran mittels elektrischer Energie der Batterie ausführbar und/oder der Halbleiterchip ist von elektrischer Energie der Batterie versorgbar. Die wenigstens eine Membran ist elektrisch leitend und durch diese wird elektrischer Strom der Batterie geleitet, so dass sich aufgrund des elektrischen Widerstandes der Membran diese erwärmt und schmilzt und somit der wenigstens eine Elektrolyt in die Batterie eingeleitet. werden kann.

Erfindungsgemäß ist das Zerreißen der wenigstens einen Membran von einem Überdruck in dem wenigstens einen Vorratsbehälter ausführbar. Der Überdruck In dem wenigstens einen Vorratsbehälter wird beispielsweise mittels einer Pumpe, z. B. einer Kolbenpumpe, oder von den aus der Batterie unter Druck ausweichenden Gasen oder Dämpfen erzeugt.

In einer weiteren Ausführungsform ist der wenigstens eine Elektrolyt mittels wenigstens einer Kapillare von dem Vorratsbehälter in die Batterie einleitbar. Aufgrund der Oberflächenspannung des wenigstens einen Elektrolyten wird somit der wenigstens eine Elektrolyt selbsttätig von dem Vorratsbehälter mittels der wenigstens einen Kapillare in die Batterie eingeleitet.

In einer weiteren Ausgestaltung umfasst die Batterie wenigstens eine Einrichtung zum Ableiten und/oder Auffangen von Gasen oder Dämpfen aus der Batterie.

Insbesondere umfasst die Einrichtung ein Überdruckventil und/oder einen Entgasungskanal und/oder eine Gasauffangkammer.

Ein erfindungsgemäßes Batterlemodul mit mehreren Batterien umfasst ein Gehäuse zur Aufnahme wenigstens eines Elektrolyten, wenigstens einen von dem Gehäuse aufgenommenen Elektrolyten, vorzugsweise wenigstens eine Einrichtung zum Ableiten und/oder Auffangen von Gasen oder Dämpfen aus den Batterien, wobei das Batteriemodul wenigstens eine in dieser Schutzrechtsanmeldung beschriebenen Batterie umfasst.

Die Mittel zum Nachfüllen des wenigstens einen Elektrolyten in die wenigstens eine Batterie können dabei in analoger Weise am Batteriemoduls wie bei der Batterie ausgebildet sein. Beispielsweise kann innerhalb des Batteriemoduls nur ein Vorratsbehälter für den wenigstens einen Elektrolyten vorhanden sein, von dem mittels Zuführungsleitungen einzeln in die Batterien der Elektrolyt nachgefüllt bzw. eingeleitet wird. Hierzu ist lediglich an jeder einzelnen Batterie eine entsprechende Zugabevorrichtung vorhanden, um entsprechend bei Bedarf an einzelnen Batterien den Elektrolyten nachfüllen zu können. Auch innerhalb eines Batteriemoduls wird einzeln für jede einzelne Batterie die Menge der ausgeleiteten Gase oder der Dämpfe mit einem Gasmengensensor erfasst. Aufgrund einer entsprechenden Meldung eines Gasmengensensors werden ab einer bestimmten ausgetretenen Gasmenge oder einer Menge an Dämpfen aus dem zentralen Vorratsbehälter für den Elektrolyten in die entsprechende Batterie mit Mangel an Elektrolyten den Elektrolyten bzw. die Elektrolyten nachgefüllt.

Eine Batterie oder eine Batteriezelle ist insbesondere die kleinste Einheit zum elektrochemischen Speichern von elektrischer Energie. Mehrere Batterien oder Batteriezellen können zu einem Batteriemodul kombiniert werden.

In einer weiteren Ausgestaltung ist der Überdruck in dem wenigstens einen Vorratsbehälter von einem Kolben erzeugbar. In einer Variante ist der wenigstens eine Vorratsbehälter außerhalb des Gehäuses oder innerhalb des Gehauses der Batterie oder innerhalb des Gehäuses des Batteriemoduls angeordnet.

In einer bevorzugten Ausgestaltung umfasst die Batterie eine positiv ladbare Elektrode und eine negativ ladbare Elektrode.

### Kurze Beschreibung der Zeichnungen

Im Nachfolgenden werden zwei Ausführungsbeispiele der Erfindung unter Bezugnahme auf die beigefügten Zeichnungen näher beschrieben. Es zeigt:
- Fig. 1: einen schematischen Querschnitt einer Batterie in einer ersten Ausführungsform,
- Fig. 2: einen schematischen Querschnitt der Batterie in einer zweiten Ausführungsform und
- Fig. 3: einen schematischen Querschnitt eines Batteriemoduls mit mehreren Batterien.

### Ausführungsformen der Erfindung

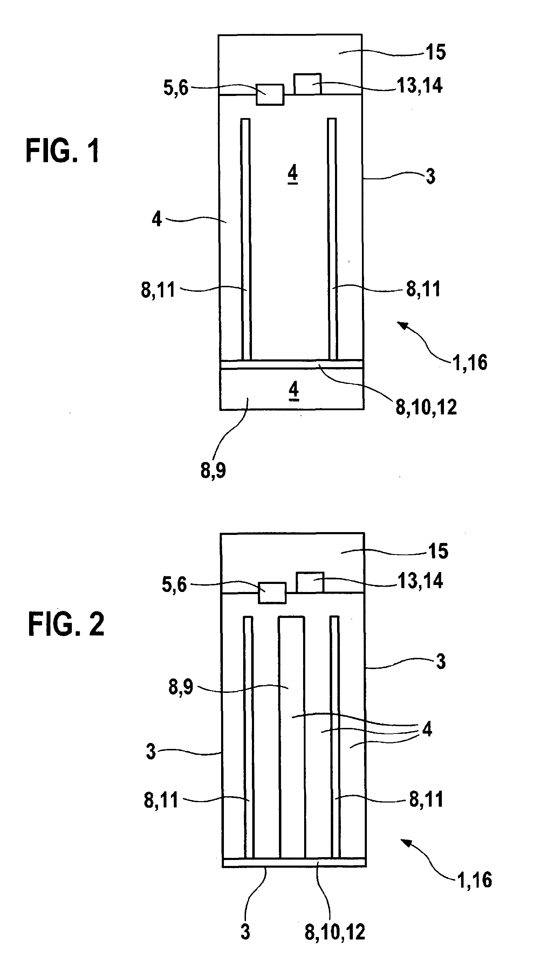

In Fig. 1 ist eine aufladbare als Lithiumionenbatterie 16 ausgebildete Batterie 1 dargestellt. Die Batterie 1 wird beispielsweise dazu verwendet, um Hybridkraftfahrzeuge mit elektrischem Strom zu versorgen. Ein Gehäuse 3 der Batterie 1 dient zur Aufnahme eines Elektrolyten 4. Der Elektrolyt 4 ist dabei von einem nicht dargestellten Zellmaterial aufgenommen. Bei dem Elektrolyten 4 handelt es sich um ein Gemisch verschiedener organischer Substanzen, beispielsweise Ethylencarbonat, Propylencarbonat und Dimethylcarbonat. In dem Gehäuse 3 ist somit ein Gemisch aus verschiedenen organischen Elektrolyten aufgenommen. Ferner umfasst die Batterie 1 eine nicht dargestellte positiv ladbare Elektrode und eine nicht dargestellte negativ ladbare Elektrode.

Das Gehäuse 3 der Batterie 1 ist gas- und flüssigkeitsdicht, wobei an einem oberen Ende des Gehäuses 3 ein Überdruckventil 6 als ein Einrichtung 5 zum Ableiten von Gasen oder Dämpfen angeordnet ist. Ab einem bestimmten Druck innerhalb des Gehäuses 3 öffnet sich das Überdrucksventil 6 und lässt Gase oder Dämpfe aus dem Gehäuse 3 in eine Gasauffangkammer 15 ausströmen. Die Gasauffangkammer 15 ist an einem oberen Ende des Gehäuses 3 der Batterie 1 angeordnet. Ein Gasmengensensor 14 mit einem integrierten Halbleiterchip 13 erfasst die Menge des aus dem Überdruckventil 6 ausgeströmten Gases. Der Gasmengensensor 14 kann auf verschiedene Arten realisiert werden. Beispielsweise ist der Gasmengensensor 14 ein Drucksensor, der den Druck in innerhalb der Gasauffangkammer 15 erfasst. Ab einem bestimmten Druck innerhalb der Gasauffangkammer 15 und damit einer bestimmten Menge an ausgeströmtem Gas aus dem Gehäuse 3 der Batterie 1 durch das Überdruckventil 6 tritt ein kritischer Mangel an Elektrolyten 4 in der Batterie 1 auf. Der Gasmengensensor 14 kann auch auf andere Weise als wie mit einem Drucksensor hergestellt werden. Beispielsweise kann auch unmittelbar an dem Überdruckventil 6, beispielsweise mittels einer Durchflussmessung, z. B. mit einem Flügelrad, die Menge des aus dem Überdruckventils 6 ausströmenden Gases erfasst werden.

An einem unteren Ende des Gehäuses 3 ist an der Batterie 1 ein Vorratsbehälter 9 als Mittel 8 zum Nachfüllen des Elektrolyten 4 vorhanden. In dem Vorratsbehälter 9 befinden sich die Elektrolyten 4 zum Nachfüllen in die Batterie 1. In das nicht dargestellte Zellmaterial der Batterie 1 mit dem Elektrolyten sind Kapillaren 11 eingestanzt. Die Kapillaren 11 enden dabei an dem Vorratsbehälter 9 und sind nur durch eine Membran 12 als Mittel 8 zum Nachfüllen des Elektrolyten 4 von dem Vorratsbehälter 9 getrennt. Der Halbleiterchip 13 wird mittels nicht dargestellter elektrischer Leitungen von der Batterie 1 mit elektrischem Strom versorgt. Sofern der Gasmengensensor 14 eine vorgegebene kritische Menge an Gas erfasst hat, die durch das Überdruckventil 6 geströmt ist, wird von dem Halbleiterchip 13 das Nachfüllen der Batterie 1 mit dem Elektrolyten 4 gesteuert. Nach einem entsprechenden Signal des Gasmengensensors 14 an den Halbleiterchip 13 wird von dem Halbleiterchip 13 der Druck in dem Vorratsbehälter 9 erhöht. Hierzu ist beispielsweise an dem Vorratsbehälter 9 ein nicht dargestellter Kolben angeordnet, der sich aufgrund einer entsprechenden Ansteuerung von dem Halbleiterchip 13 bewegt und dadurch den Druck innerhalb des Vorratsbehälters 9 erhöht. Der Druck in dem Vorratsbehälter 9 kann anstelle eines Kolbens beispielsweise auch mittels dem aus der Batterie 1 durch das Überdruckventil 6 ausströmenden Gas zur Verfügung gestellt werden.

Aufgrund dieser Druckerhöhung in dem Vorratsbehälter 9 für den Elektrolyten 4 reist die Membranen 12 als Zugabevorrichtung 10 und gibt damit den Strömungsweg zwischen dem Vorratsbehälter 9 und der Batterie 1 frei. Die Elektrolyten 4 können dadurch in den Innenraum des Gehäuses 3 einströmen und die durch Reaktionen verbrauchten Elektrolyten 4 ersetzen. Die Kapillaren 11 bewirken, dass sich der Elektrolyt 4 aus dem Vorratsbehälter 9 schnell und gleichmäßig in dem Zellmaterial innerhalb des Gehäuses 3 verteilt. Aufgrund der Oberflächenspannung des Elektrolyten 4 strömt der Elektrolyt 4 entgegen der Schwerkraft in die Kapillaren 11 ein. Die Membran 12 besteht dabei im Allgemeinen aus entsprechend geeigneten thermoplastischen Kunststoffen. Es handelt sich hierbei beispielsweise um Polystyrol (PS), Polyvinylchlorid (PVC), Polyamide (PA), beispielsweise Nylon, und Acrylnitril-Butadien-Styrol (ABS).

Der aufgrund verschiedener chemischer Reaktionen in der Batterie 1 verbrauchte Elektrolyt 4 kann somit mittels des in dem Vorratsbehälter 9 gespeicherten Elektrolyten 4 nachgefüllt und damit die Lebensdauer der Batterie 1 wesentlich verlängert werden. In einem weiteren, nicht dargestellten Ausführungsbeispiel sind anstelle eines Vorratsbehälters 9 mehrere Vorratsbehälter 9 vorhanden. Bei mehreren Vorratsbehältern 9 kann damit auch mehrmals aus den Vorratsbehältern in die Batterie 1 der Elektrolyt 4 nachgefüllt werden. Hierzu sind im Allgemeinen für die Vorratsbehälter 9 je eine Zugabevorrichtung 10, d. h. eine Membran 12, erforderlich.

In Fig. 2 ist ein schematischer Querschnitt der Batterie 2 in einem zweiten Ausführungsbeispiel dargestellt. Im Nachfolgenden werden im Wesentlichen nur die Unterschiede zu dem ersten Ausführungsbeispiel gemäß Fig. 1 dargestellt. Der Vorratsbehälter 9 ist zentrisch im Innenraum der Batterie 1 angeordnet. Die Membran 12 schließt ein unteres Ende des zylinderförmigen Vorratsbehälters 9 ab und außerdem auch die Kapillaren 11. Bei einer von dem Gasmengensensor 14 erfassten kritischen Menge an Gas, die durch das Überdruckventil 6 geströmt ist, wird von dem Halbleiterchip 13 die Membran 12 mittels elektrischen Stromes aus der Batterie 1 geschmolzen. Die Membran 12 ist hierzu mit entsprechenden Stromleitungen mit den beiden nicht dargestellten Elektroden der Batterie 1 verbunden sowie mit einer Steuerschaltung auch mit dem Halbleiterchip 13 sowie einem entsprechenden Schalter (nicht dargestellt). Aufgrund des elektrischen Widerstandes der Strom leitenden Membran 12 erwärmt sich diese und schmilzt, so dass sich der Strömungsweg für die Elektrolyten 4 von dem Vorratsbehälter 9 zu den Kapillaren 11 öffnet, so dass die Elektrolyten 4 aus dem Vorratsbehälter 9 in die Kapillaren 11 und somit in die Batterie 1 einströmen können. Der flüssige Elektrolyt 4 verteilt sich damit gleichmäßig in der Batterie 1. Als Material für die Membran 12 werden im Allgemein thermoplastische Kunststoffe, beispielsweise Polyethylen niedriger Dichte (LDPE oder PE weich mit einer Schmelztemperatur von 105 bis 115°C), oder Polyethylen PE-LD (Schmelztemperatur 110°C), PE-HD (Schmelztemperatur 135°C), PE-LLD (Schmelztemperatur 115 bis 125°C) oder Kunststoffe mit einem niedrigerem Schmelzpunkt verwendet. Ansonsten entspricht die Funktionsweise des zweiten Ausführungsbeispieles gemäß Fig. 2 in analoger Weise dem ersten Ausführungsbeispiel gemäß Fig. 1.

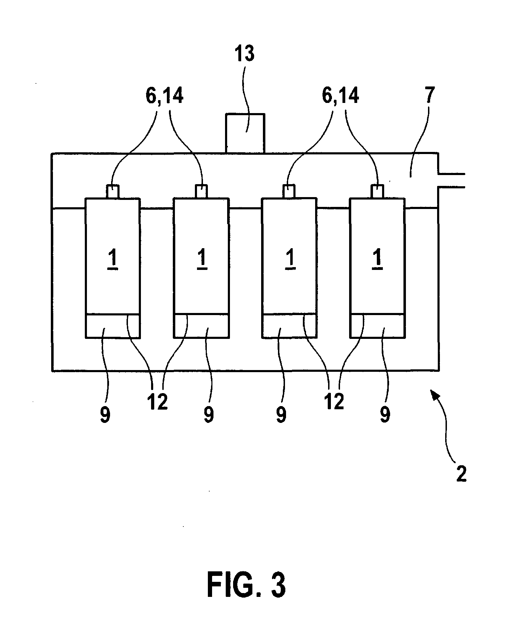

In Fig. 3 ist ein schematischer Querschnitt eines Batteriemoduls 2 mit vier Batterien 1 dargestellt. Die Batterien 1 sind am unteren Ende jeweils mit dem Vorratsbehälter 9 für den Elektrolyten 4 versehen. Am oberen Ende der Batterie 1 ist ein Überdruckventil 6 mit einem integrierten Gasmengensensor 14 vorhanden. Bei einem Überdruck innerhalb einer Batterie 1 strömt das Gas aus der Batterie 1 durch das Überdruckventil 6 in einen Entgasungskanal 7 für sämtliche Batterien 1 des Batteriemoduls 2. Von einem zentralen Halbleiterchip 13 für sämtliche Batterien 1 des Batteriemoduls 2 werden die Messdaten der Gasmengensensoren 14 der Batterien 1 erfasst. Bei einem Überschreiten einer bestimmten vorgegebenen kritischen Mengen an ausgeströmten Gasen aus dem Überdruckventil 6 wird mittels einer Membran 12 aus dem Vorratsbehälter 9 Elektrolyt 4 in die Batterie 1 nachgefüllt. Dies wird dabei separat für die einzelnen Batterien 1 des Batteriemoduls 2 unabhängig voneinander von dem zentralen Halbleiterchip 13 gesteuert. In einer nicht dargestellten Variante des Batteriemoduls 1 kann auch nur ein zentraler Vorratsbehälter 9 für sämtliche Batterien 1 des Batteriemoduls 2 vorhanden sein. Mittels nicht dargestellter Zuführungsleitungen wird einzeln aus dem zentralen Vorratsbehälter 9 das Elektrolyt 4 bei entsprechendem Bedarf mittels der Zugabevorrichtung 10 zu der entsprechenden Batterie 1 mit Bedarf an Elektrolyten 4 eingeleitet. Dadurch kann in besonders vorteilhafter Weise innerhalb eines Batteriemoduls 2 mit nur einem Vorratsbehälter 9 bei sämtlichen Batterien 1 des Batteriemoduls 2 mehrfach der Elektrolyt 4 nachgefüllt werden.

Die Einzelheiten der verschiedenen Ausführungsbeispiele sind miteinander kombinierbar, sofern nichts Gegenteiliges erwähnt wird.

Insgesamt betrachtet sind mit der erfindungsgemäßen Batterie 1 und dem erfindungsgemäßen Batteriemodul 2 wesentliche Vorteile verbunden. Mittels des einfachen Nachfüllens des Elektrolyten 4 in die Batterie 1 kann auf einfache und preiswerte Weise die Lebensdauer von Batterien 1 deutlich verlängert werden, so dass dadurch die Kosten der Batterie 1 bezogen auf die gesamte Lebensdauer der Batterie 1 wesentlich verringert werden.

## Patentansprüche

1. Batterie (1), umfassend
- ein Gehäuse (3) zur Aufnahme wenigstens eines Elektrolyten (4),
- wenigstens einen von dem Gehäuse (3) aufgenommenen Elektrolyten (4),
wobei die Batterie (1) mit wenigstens einem Mittel (8) zum Nachfüllen des wenigstens einen Elektrolyten (4) versehen ist, **dadurch gekennzeichnet, dass** das Nachfüllen des wenigstens einen Elektrolyten (4) mit Hilfe eines eine Gasmenge mindestens indirekt erfassenden Gasmengensensors (14) steuerbar ist und/oder das wenigstens eine Mittel (8) wenigstens eine Zugabevorrichtung (10) zum Einleiten des wenigstens einen Elektrolyten (4) von wenigstens einem Vorratsbehälter (9) in die Batterie (1) umfasst, wobei die wenigstens eine Zugabevorrichtung (10) eine Membran (12) umfasst, wobei das Einleiten des wenigstens einen Elektrolyten mittels Zerreißen oder Schmelzen der wenigstens einen Membran (12) ausführbar ist, wobei das Schmelzen der wenigstens einen Membran (12) von einem Halbleiterchip (13) steuerbar ist und das Zerreißen der wenigstens einen Membran (12) von einem Überdruck in dem wenigstens einen Vorratsbehälter (9) ausführbar ist.

2. Batterie nach Anspruch 1, **dadurch gekennzeichnet, dass** das wenigstens eine Mittel (8) wenigstens einen Vorratsbehälter (9) für den wenigstens einen Elektrolyten (4) umfasst.

3. Batterie nach Anspruch 1,
**dadurch gekennzeichnet, dass**
das Schmelzen der wenigstens einen Membran (12) mittels elektrischer Energie der Batterie (1) ausführbar ist und/oder der Halbleiterchip (13) von elektrischer Energie der Batterie (1) versorgbar ist.

4. Batterie nach einem oder mehreren der vorhergehenden Ansprüche,
**dadurch gekennzeichnet, dass**
der wenigstens eine Elektrolyt (4) mittels wenigstens, einer Kapillare (11) von dem Vorratsbehälter (9) in die Batterie (1) einleitbar ist.

5. Batterie nach einem oder mehreren der vorhergehenden Ansprüche,
**dadurch gekennzeichnet, dass**
die Batterie (1) wenigstens eine Einrichtung (5) zum Ableiten und/oder Auffangen von Gasen oder Dämpfen aus der Batterie (1) umfasst.

6. Batterie nach Anspruch 4,
**dadurch gekennzeichnet, dass**
die Einrichtung (5) ein Überdruckventil (6) und/oder einen Entgasungskanal (7) und/oder eine Gasauffangkammer (15) umfasst.

7. Batteriemodul (2) mit mehreren Batterien (1), umfassend ein Gehäuse (3) zur Aufnahme wenigstens eines Elektrolyten (4), wenigstens einen von dem Gehäuse (3) aufgenommenen Elektrolyten (4), vorzugsweise wenigstens eine Einrichtung (5) zum Ableiten und/oder Auffangen von Gasen oder Dämpfen aus den Batterien (1),
**dadurch gekennzeichnet, dass**
das Batteriemodul (2) wenigstens eine Batterie (1) gemäß einem oder mehreren der Ansprüche 1 bis 6 umfasst und/oder das Batteriemodul (2) mit wenigstens einem Mittel (8) zum Nachfüllen des wenigstens einen Elektrolyten (4) in die wenigstens eine Batterie (1) versehen ist, wobei das Nachfüllen des wenigstens einen Elektrolyten (4) mit Hilfe eines eine Gasmenge mindestens indirekt erfassenden Gasmengensensors (14) steuerbar ist und/oder das wenigstens eine Mittel (8) wenigstens eine Zugabevorrichtung (10) zum Einleiten des wenigstens einen Elektrolyten (4) von wenigstens einem Vorratsbehälter (9) in die Batterie (1) umfasst, wobei die wenigstens eine Zugabevorrichtung (10) eine Membran (12) umfasst, wobei das Einleiten des wenigstens einen Elektrolyten mittels Zerreißen oder Schmelzen der wenigstens einen Membran (12) ausführbar ist, wobei das Schmelzen der wenigstens einen Membran (12) von einem Halbleiterchip (13) steuerbar ist und das Zerreißen der wenigstens einen Membran (12) von einem Überdruck in dem wenigstens einen Vorratsbehälter (9) ausführbar ist.

8. Batteriemodul nach Anspruch 7, **dadurch gekennzeichnet dass** das wenigstens eine Mittel (8) wenigstens einen Vorratsbehälter (9) für den wenigstens einen Elektrolyten (4) umfasst.

## Claims

1. Battery (1), comprising
- a housing (3) for receiving at least one electrolyte (4) and
- at least one electrolyte (4) received by the housing (3),
wherein the battery (1) is provided with at least one means (8) for refilling with the at least one electrolyte (4), **characterized in that** the refilling with the at least one electrolyte (4) can be controlled with the aid of a gas quantity sensor (14), sensing a quantity of gas at least indirectly, and/or the at least one means (8) comprises at least one adding device (10) for introducing the at least one electrolyte (4) from at least one reservoir (9) into the battery (1), wherein the at least one adding device (10) comprises a membrane (12), wherein the introduction of the at least one electrolyte can be performed by means of tearing or melting the at least one membrane (12), wherein the melting of the at least one membrane (12) can be controlled by a semiconductor chip (13) and the tearing of the at least one membrane (12) can be performed by a positive pressure in the at least one reservoir (9).

2. Battery according to Claim 1, **characterized in that** the at least one means (8) comprises at least one reservoir (9) for the at least one electrolyte (4).

3. Battery according to Claim 1, **characterized in that** the melting of the at least one membrane (12) can be performed by means of electrical energy from the battery (1) and/or the semiconductor chip (13) can be supplied with electrical energy from the battery (1).

4. Battery according to one or more of the preceding claims, **characterized in that** the at least one electrolyte (4) can be introduced into the battery (1) by means of at least one capillary (11) from the reservoir (9).

5. Battery according to one or more of the preceding claims, **characterized in that** the battery (1) comprises at least one device (5) for carrying away and/or collecting gases or vapours from the battery (1).

6. Battery according to Claim 4, **characterized in that** the device (5) comprises a pressure-relief valve (6) and/or a degassing channel (7) and/or a gas collecting chamber (15).

7. Battery module (2) having a plurality of batteries (1), comprising a housing (3) for receiving at least one electrolyte (4), at least one electrolyte (4) received by the housing (3) and preferably at least one device (5) for carrying away and/or collecting gases or vapours from the batteries (1),
**characterized in that**
the battery module (2) comprises at least one battery (1) according to one or more of Claims 1 to 6 and/or the battery module (2) is provided with at least one means (8) for refilling the at least one battery (1) with the at least one electrolyte (4), wherein the refilling with the at least one electrolyte (4) can be controlled with the aid of a gas quantity sensor (14), sensing a quantity of gas at least indirectly, and/or the at least one means (8) comprises at least one adding device (10) for introducing the at least one electrolyte (4) from at least one reservoir (9) into the battery (1), wherein the at least one adding device (10) comprises a membrane (12), wherein the introduction of the at least one electrolyte can be performed by means of tearing or melting the at least one membrane (12), wherein the melting of the at least one membrane (12) can be controlled by a semiconductor chip (13) and the tearing of the at least one membrane (12) can be performed by a positive pressure in the at least one reservoir (9).

8. Battery module according to Claim 7, **characterized in that** the at least one means (8) comprises at least one reservoir (9) for the at least one electrolyte (4).

## Revendications

1. Batterie (1) comportant :
un boîtier (3) qui reprend au moins un électrolyte (4) et
au moins un électrolyte (4) repris dans le boîtier (3),
la batterie (1) étant dotée d'au moins un moyen (8) de remplissage par un ou plusieurs électrolytes (4),
**caractérisée en ce que**
le remplissage par le ou les électrolytes (4) peut être commandé à l'aide d'un capteur (14) de débit de gaz qui saisit au moins indirectement un débit de gaz et/ou
**en ce que** le ou les moyens (8) comportent au moins un dispositif d'amenée (10) qui introduit le ou les électrolytes (4) dans la batterie (1) depuis au moins un récipient de réserve (9),
**en ce que** le ou les dispositifs d'amenée (10) comportent une membrane (12),
**en ce que** l'introduction du ou des électrolytes peut être exécutée par déchirure ou fusion de la ou des membranes (12),
**en ce que** la fusion de la ou des membranes (12) peut être commandée par une puce semi-conductrice (13) et
**en ce que** la déchirure de la ou des membranes (12) peut être réalisée à l'aide de la surpression qui règne dans le ou les récipients de réserve (9).

2. Batterie selon la revendication 1, **caractérisée en ce que** le ou les moyens (8) comportent au moins un récipient de réserve (9) prévu pour le ou les électrolytes (4).

3. Batterie selon la revendication 1, **caractérisée en ce que** la fusion de la ou des membranes (12) peut être réalisée au moyen de l'énergie électrique de la batterie (1) et/ou **en ce que** la puce semi-conductrice (13) peut être alimentée par l'énergie électrique de la batterie (1).

4. Batterie selon l'une ou plusieurs des revendications précédentes, **caractérisée en ce que** le ou les électrolytes (4) peuvent être introduits dans la batterie (1) depuis le récipient de réserve (9) au moyen d'au moins un capillaire (11).

5. Batterie selon l'une ou plusieurs des revendications précédentes, **caractérisée en ce que** la batterie (1) comporte au moins un dispositif (5) d'évacuation et/ou de reprise de gaz ou des vapeurs hors de la batterie (1).

6. Batterie selon la revendication 4, **caractérisée en ce que** le dispositif (5) comporte une soupape de surpression (6), un canal de dégazage (7) et/ou une chambre (15) de reprise de gaz.

7. Module (2) de batteries présentant
plusieurs batteries (1) comportant un boîtier (3) qui reprend au moins un électrolyte (4),
au moins un électrolyte (4) repris par le boîtier (3) et
de préférence au moins un dispositif (5) d'évacuation et/ou de reprise de gaz ou de vapeurs hors de la batterie (1),
**caractérisé en ce que**
le module (2) de batteries comporte au moins une batterie (1) selon l'une ou plusieurs des revendications 1 à 6 et/ou
**en ce que** le module de batterie (2) est doté d'au moins un moyen (8) de remplissage de la ou des batteries (1) par le ou les électrolytes (4),
**en ce que** le remplissage par le ou les électrolytes (4) peut être commandé au moyen d'un capteur (14) de débit de gaz qui saisit au moins indirectement un débit de gaz,
**en ce que** le ou les moyens (8) comportent au moins un dispositif d'amenée (10) qui introduit le ou les électrolytes (4) dans la batterie (1) depuis au moins un récipient de réserve (9),
**en ce que** le ou les dispositifs d'amenée (10) comportent une membrane (12),
**en ce que** l'introduction du ou des électrolytes peut être exécutée par déchirure ou fusion de la ou des membranes (12),
**en ce que** la fusion de la ou des membranes (12) peut être commandée par une puce semi-conductrice (13) et
**en ce que** la déchirure de la ou des membranes (12) peut être réalisée à l'aide de la surpression qui règne dans le ou les récipients de réserve (9).

8. Module de batteries selon la revendication 7, **caractérisé en ce que** le ou les moyens (8) comportent au moins un récipient de réserve (9) prévu pour le ou les électrolytes (4).
